# EUROPEAN PATENT SPECIFICATION

(11) **EP 3 778 932 B1**
(45) Date of publication and mention of the grant of the patent: **02.11.2022**
(21) Application number: 19778249.3
(22) Date of filing: 18.02.2019
(51) Int. Cl.: C21D 9/28, C21D 1/667

(54) **TRAVERSE HARDENING DEVICE**
QUERTRÄGERHÄRTUNGSVORRICHTUNG
DISPOSITIF DE DURCISSEMENT TRANSVERSAL

(30) Priority: 26.03.2018 JP 2018058807
(43) Date of publication of application: 17.02.2021
(73) Proprietor: NIPPON STEEL CORPORATION, Chiyoda-ku Tokyo 100-8071 (JP)
(72) Inventor: YAMANE Akihito, Tokyo 100-8071 (JP); HATA Toshiyuki, Tokyo 100-8071 (JP); KOZUKA Chihiro, Tokyo 100-8071 (JP)
(74) Representative: Zimmermann & Partner Patentanwälte mbB
(86) International application number: PCT/JP2019/005800
(87) International publication number: WO 2019/187765

(56) References cited:
- WO-A1-2019/181382
- JP-A- 2005 344 159
- JP-A- 2008 240 101
- JP-A- 2012 177 144
- JP-A- 2014 214 326
- JP-A- 2018 003 091

## Description

### [Technical Field of the Invention]

The present invention relates to a traverse hardening device.

Priority is claimed on Japanese Patent Application No. 2018-058807 filed in Japan on March 26, 2018.

### [Related Art]

Conventionally, a traverse hardening device for performing traverse hardening on a shaft-like body such as a ball screw shaft is known (see, for example, Patent Document 1).

In the traverse hardening device of Patent Document 1, a heating device and a cooling device (cooling unit) can move in a vertical direction with respect to a ball screw shaft (shaft-like body) disposed in the vertical direction.

The heating device includes a high-frequency heating coil and a heating housing that houses the high-frequency heating coil. In the heating device, the shaft-like body is heat-treated by the high-frequency heating coil in a state in which the heating housing is filled with nitrogen gas or the like to be kept in an oxygen-free state.

The cooling device is disposed below the heating housing. The cooling device includes a pair of cooling liquid supply chambers, a pair of cooling liquid supply conduits, and a cooling liquid storage chamber. Each of the cooling liquid supply chambers is formed in a C-shape. A shaft-like body is inserted into the pair of cooling liquid supply chambers. A plurality of injection holes are formed to be directed toward the shaft-like body on an inner circumference of each of the cooling liquid supply chambers.

The cooling liquid supply conduits are connected to the cooling liquid supply chambers. A discharge control plate is attached to lower ends of the pair of cooling liquid supply chambers to close the lower ends of the cooling liquid storage chambers. An insertion hole into which a ball screw shaft is inserted is provided in the discharge control plate. An annular gap is formed between the insertion hole and an outer surface of the ball screw shaft.

In the cooling device configured as above, a cooling liquid supplied to the pair of cooling liquid supply chambers by the pair of cooling liquid supply conduits is supplied to the cooling liquid storage chamber from the injection holes of each cooling liquid supply chamber. The supplied cooling liquid cools the ball screw shaft and is discharged from the annular gap.

### [Patent Document]

### [Patent Document 1]

Japanese Unexamined Patent Application, First Publication No. 2008-240101

### [Problems to be Solved by the Invention]

A case of performing traverse hardening on a shaft-like body including a main body part and a large-diameter part which is provided in a part of the main body part in an axial direction and has an outer diameter larger than that of the main body part, using the traverse hardening device of the Patent Document 1 may be conceived. In this case, a size of the annular gap changes due to a difference between the outer diameter of the main body part and the outer diameter of the large-diameter part. Therefore, there is a problem in that a flow rate of the cooling liquid discharged from the annular gap changes and thus the ball screw shaft cannot be cooled stably.

Therefore, providing a traverse hardening device with a cooling ring (cooling unit) in which a through hole penetrating in a vertical direction is formed and cooling a shaft-like body using the cooling ring have been studied. In this traverse hardening device, a shaft-like body is inserted into the cooling ring. When the cooling liquid is injected to the shaft-like body from injection holes formed on an inner circumferential surface of the through hole, the shaft-like body is cooled.

However, the traverse hardening device has a problem in that, when the cooling liquid flows from a main body part toward a large-diameter part, the cooling liquid flows over the large-diameter part and is scattered radially outward from the shaft-like body. The scattered cooling liquid cannot cool the main body part disposed below the large-diameter part.

The present invention has been made in view of such problems, and an objective thereof is to provide a traverse hardening device capable of efficiently cooling a shaft-like body including a large-diameter part having an outer diameter larger than that of a main body part.

### [Means for Solving the Problem]

In order to solve the above-described problems, the present invention proposes the following aspects.
(1) A traverse hardening device according to one aspect of the present invention performs traverse hardening on a shaft-like body which includes a main body part, and a large-diameter part provided in a part of the main body part in an axial direction and having an outer diameter larger than that of the main body part, and is disposed such that an axis thereof is directed along a vertical direction. The traverse hardening device is provided with: a heating unit which heats the shaft-like body; a cooling unit including a through hole which penetrates in the vertical direction and through which the shaft-like body is inserted, and an injection hole formed on an inner circumferential surface of the through hole and configured to inject a cooling liquid; and a guide cylinder in which an inner diameter of a lower end is smaller than an inner diameter of an upper end and at least a part thereof is disposed below the cooling unit and through which the shaft-like body is inserted.

According to this aspect, the shaft-like body is heated by the heating unit and then cooled by the cooling unit. Some of the cooling liquid injected from the injection hole of the cooling unit, having cooled the shaft-like body, and scattered radially outward hits an inner circumferential surface of the guide cylinder. Since the guide cylinder is formed so that an inner diameter of the lower end is smaller than an inner diameter of the upper end, the cooling liquid flowing downward in the guide cylinder under the effect of gravity flows along the inner circumferential surface of the guide cylinder to approach the shaft-like body. Some of the cooling liquid that has flowed to approach the shaft-like body cools the shaft-like body again. Accordingly, a shaft-like body including a large-diameter part can be efficiently cooled.

(2) In the traverse hardening device according to the above-described (1), an inner diameter of the guide cylinder may gradually decrease downward from an upper portion.

In this case, the cooling liquid that has hit the inner circumferential surface of the guide cylinder can be caused to flow more reliably to approach the shaft-shaped body.

(3) The traverse hardening device according to the above-described (1) or (2), may be configured as follows: the guide cylinder is disposed to surround a lower end of the through hole; and the upper end of the guide cylinder is disposed at the same height position as the lower end of the through hole or above the lower end of the through hole.

In this case, the cooling liquid discharged from the through hole of the cooling unit to the shaft-like body and then flowing downward can more reliably hit the inner circumferential surface of the guide cylinder, and the shaft-like body can be cooled again using the cooling liquid.

(4) The traverse hardening device according to any one of the above-described (1) to (3) may include, as the guide cylinder, a first guide cylinder, and a second guide cylinder at least a part of which is able to be disposed below the first guide cylinder.

In this case, the cooling liquid that has flowed out below the first guide cylinder is made to hit an inner circumferential surface of the second guide cylinder, and the shaft-like body can be cooled again using the cooling liquid that flows along the inner circumferential surface of the second guide cylinder and approaches the shaft-like body.

(5) The traverse hardening device according to the above-described (4) may include a first support cylinder to which the first guide cylinder is fixed, a second support cylinder to which the second guide cylinder is fixed and at least a part of which is insertable into the first support cylinder, a locking part provided in the first support cylinder, and a locked part which is provided in the second support cylinder and to which the locking part is locked from below.

In this case, the first support cylinder is moved upward relative to the second support cylinder from a state in which at least a part of the second support cylinder is inserted into the first support cylinder. When the locking part provided in the first support cylinder is locked to the locked part provided in the second support cylinder from below the locked part, the first support cylinder and the second support cylinder move upward integrally.

In this way, the first support cylinder to which the first guide cylinder is fixed and the second support cylinder to which the second guide cylinder is fixed can be switched from a state of having a relatively small entire length in the vertical direction in which at least a part of the second support cylinder is inserted into the first support cylinder to a state of having a relatively large entire length in the vertical direction in which the locking part is locked to the locked part by simply moving the first support cylinder upward.

### [Effects of the Invention]

According to the traverse hardening device of the above-described aspect, the shaft-like body including the large-diameter part can be efficiently cooled.

### [Brief Description of the Drawings]

FIG. 1 is a schematic side view in which a part of a traverse hardening device according to one embodiment of the present invention is cut away.
FIG. 2 is a plan view illustrating a first support part of the traverse hardening device, taken in a direction of arrow A-A of FIG. 1.
FIG. 3 is a longitudinal sectional view of a main part for explaining an operation of the traverse hardening device.
FIG. 4 is a longitudinal sectional view of a main part for explaining an operation of the traverse hardening device.
FIG. 5 is a longitudinal sectional view of a main part for explaining an operation of the traverse hardening device.
FIG. 6 is a longitudinal sectional view of a main part in a modified example of the traverse hardening device.
FIG. 7 is a view illustrating a main part in another modified example of one embodiment of the present invention and is a longitudinal sectional view when support parts are in an extended state.
FIG. 8 is a longitudinal sectional view when the support parts are in a contracted state in the modified example illustrated in FIG. 7.
FIG. 9 is a view illustrating a main part in still another modified example of one embodiment of the present invention and is a perspective view when guide cylinders and connecting members are in an extended state.
FIG. 10 is a view illustrating a main part in yet another modified example of one embodiment of the present invention and is a longitudinal sectional view when guide cylinders and connecting members are in an extended state.

### [Embodiments of the Invention]

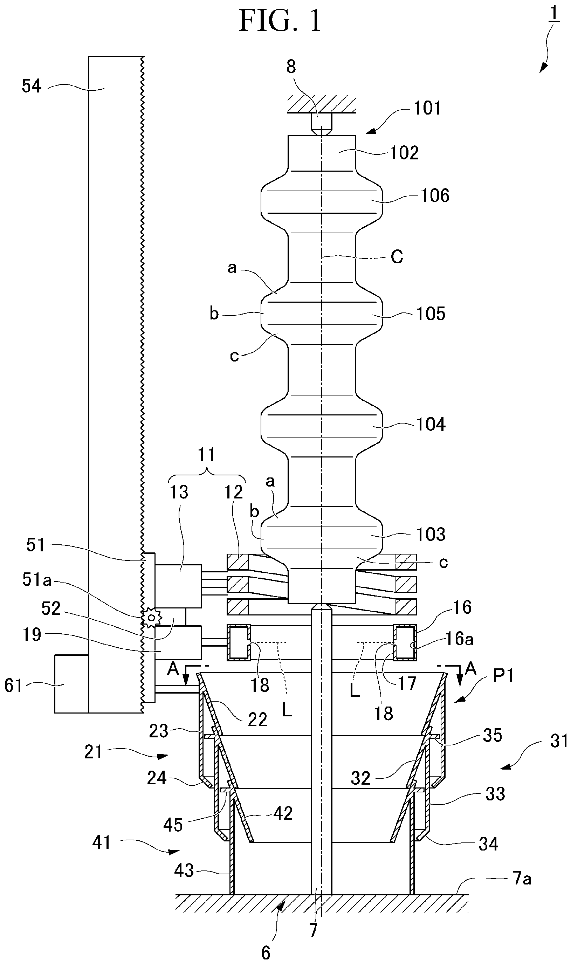

Hereinafter, one embodiment of a traverse hardening device according to the present invention will be described with reference to FIGS. 1 to 10.

As illustrated in FIG. 1, a traverse hardening device 1 of the present embodiment is a device for performing traverse hardening on a shaft-like body 101 such as an axle of a railway vehicle using a high-frequency current.

First, the shaft-like body 101 will be described. The shaft-like body 101 includes a main body part 102, and large-diameter parts 103, 104, 105, and 106 provided in a part of the main body part 102 in an axis C direction and having a larger diameter (outer diameter) than the main body part 102.

The main body part 102 and the four large-diameter parts 103, 104, 105, and 106 (hereinafter, also referred to as "large-diameter part 103 and the like") are each formed in a columnar shape. A central axis of each of the main body part 102 and the large-diameter part 103 and the like are disposed coaxially with a common axis. The common axis coincides with the axis C.

The large-diameter parts 103 and the like are formed to have substantially the same diameter as each other. The large-diameter parts 103, 104, 105, and 106 are disposed at positions separated from each other in that order upward from below. The large-diameter parts 103, 104, 105, and 106 each include an upper portion a having an outer circumferential surface in a truncated cone shape that extends to spread radially downward from an upper portion, a central portion b having an outer circumferential surface in a columnar shape which is continuous with a bottom of the upper portion a and whose outer diameter is constant downward from an upper portion, and a lower portion c having an outer circumferential surface in an inverted truncated cone shape which is continuous with a bottom of the central portion b and narrowing and tapered downward from an upper portion.

The shaft-like body 101 is disposed so that the axis C extends in a vertical direction (vertical direction).

Further, the number of the large-diameter parts 103 and the like provided in the shaft-like body 101 is not limited to four, and may be any number of one to three, or five or more. The large-diameter part 103 and the like may have outer diameters different from each other.

Also, in each of the large-diameter parts 103, 104, 105, and 106, shapes of the upper portion a and the lower portion c in a longitudinal sectional view including the axis C are each linear. However, shapes of the upper portion a and the lower portion c are not limited to a linear shape, and may be a convex curved shape, a concave curved shape, or a curved shape combining these.

The shaft-like body 101 is formed of a material having conductivity such as carbon steel or a low-alloy steel containing 95% by weight or more of iron (Fe), which is ferrite.

As illustrated in FIG. 1, the traverse hardening device 1 includes a support part 6, a heating unit 11, a cooling ring (cooling unit) 16, a first support part 21, a second support part 31, and a third support part 41, and a control unit 61. In the following description, the first support part 21, the second support part 31, and the third support part 41 may be simply referred to as the support parts 21, 31, and 41.

The support part 6 includes a lower center 7 and an upper center 8. The lower center 7 supports a lower end portion of the main body part 102 from below the main body part 102. The upper center 8 supports an upper end portion of the main body part 102 from above the main body part 102. The lower center 7 and the upper center 8 coaxially support the shaft-like body 101 so that the axis C extends in the vertical direction.

The heating unit 11 includes a coil member 12 and a current transformer 13.

The coil member 12 is formed in an annular shape in which an element wire of a coil is spirally wound. An inner diameter of the coil member 12 is larger than a maximum outer diameter of the shaft-like body 101. The shaft-like body 101 is inserted into the coil member 12.

The current transformer 13 is electrically and mechanically connected to each end portion of the coil member 12. The current transformer 13 causes a high-frequency current to flow through the coil member 12.

The cooling ring 16 is formed in an annular shape in the present embodiment. The cooling ring 16 includes a through hole 17 formed in a circular shape in a plan view and penetrating therethrough in the vertical direction. The shaft-like body 101 is coaxially inserted into the through hole 17 of the cooling ring 16. An internal space 16a is formed in the cooling ring 16. A plurality of injection holes 18 are formed to be spaced apart at equiangular intervals in a circumferential direction on an inner circumferential surface of the cooling ring 16 forming the through hole 17. Each of the injection holes 18 communicates with the internal space 16a. The cooling ring 16 is disposed below the coil member 12.

A pump 19 is connected to the cooling ring 16. The pump 19 supplies a cooling liquid L such as water into the internal space 16a of the cooling ring 16. The cooling liquid L supplied into the internal space 16a is injected toward the shaft-like body 101 through the plurality of injection holes 18 to cool the shaft-like body 101.

Further, a shape of the cooling ring (cooling unit) 16 is not limited to an annular shape, and may be, for example, a rectangular parallelepiped having a rectangular frame shape in a plan view.

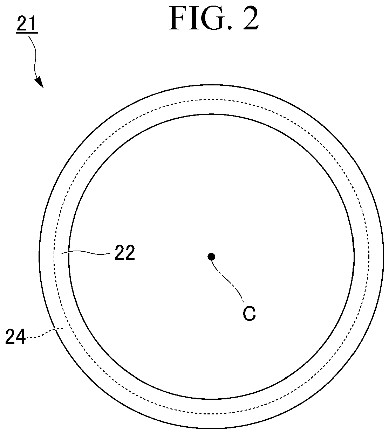

As illustrated in FIGS. 1 and 2, the first support part 21 includes a first guide cylinder (guide cylinder) 22, a first support cylinder 23, and a first locking part (locking part) 24.

The first guide cylinder 22 is formed in a cylindrical shape having an axis extending in the vertical direction. An inner diameter and an outer diameter of the first guide cylinder 22 gradually decrease downward from an upper portion. An inner diameter of a lower end of the first guide cylinder 22 is larger than the maximum outer diameter of the shaft-like body 101. An outer shape of the first guide cylinder 22 is a so-called inverted truncated cone shape. That is, an inner circumferential surface of the first guide cylinder 22 forms an inclined surface that approaches the shaft-like body 101 downward from an upper portion in the longitudinal sectional view illustrated in FIG. 1. The first guide cylinder 22 is disposed below the cooling ring 16. The shaft-like body 101 is inserted into the first guide cylinder 22.

Further, a shape of the first guide cylinder 22 is not particularly limited as long as the inner diameter of the lower end is smaller than the inner diameter of the upper end and the inner diameter does not increase going downward. That is, the shape of the inner circumferential surface of the first guide cylinder 22 in the longitudinal sectional view is a linear shape in the present embodiment but may be a convex curved shape or a concave curved shape. Alternatively, a discontinuous portion such as a step may be present at an intermediate position downward from an upper portion.

The first support cylinder 23 is formed in a cylindrical shape having an axis extending in the vertical direction. An inner diameter and an outer diameter of the first support cylinder 23 are constant regardless of a position in the vertical direction. The inner diameter of the first support cylinder 23 is smaller than an outer diameter at an upper end of the first guide cylinder 22. The first support cylinder 23 is disposed coaxially with the first guide cylinder 22 and on a radially outward side of (around) the first guide cylinder 22. An upper end portion of the first support cylinder 23 is fixed to an upper end portion of the first guide cylinder 22.

The first locking part 24 is formed in a cylindrical shape and is provided at a lower end portion of the first support cylinder 23. An inner diameter and an outer diameter of the first locking part 24 gradually decrease downward from an upper portion. That is, an inner circumferential surface of the first locking part 24 forms an inclined surface that approaches the axis C downward from an upper portion in the longitudinal sectional view illustrated in FIG. 1.

The first guide cylinder 22, the first support cylinder 23, and the first locking part 24 which constitute the first support part 21 are formed of stainless steel, resin, or the like.

The first support part 21 is disposed below the cooling ring 16.

As illustrated in FIG. 1, the second support part 31 includes a second guide cylinder (guide cylinder) 32, a second support cylinder 33, a second locking part (locking part) 34, and a second locked part (locked part) 35. The second guide cylinder 32, the second support cylinder 33, and the second locking part 34 are each configured similarly to the first guide cylinder 22, the first support cylinder 23, and the first locking part 24 of the first support part 21, and only outer diameters and inner diameters thereof are different.

An outer diameter at an upper end of the second guide cylinder 32 is smaller than the inner diameter of the first support cylinder 23. An inner diameter at an upper end of the second guide cylinder 32 is larger than an outer diameter at the lower end of the first guide cylinder 22.

An outer diameter of the second support cylinder 33 is smaller than an inner diameter at a lower end of the first locking part 24. An upper end portion of the second support cylinder 33 is fixed to an upper end portion of the second guide cylinder 32. The upper end portion of the second support cylinder 33 can be inserted into the first support cylinder 23 and the first locking part 24. Further, an entire second support cylinder 33 may be configured to be insertable into the first support cylinder 23.

The second locked part 35 is formed in an annular shape and is provided at the upper end portion of the second support cylinder 33. The second locked part 35 protrudes radially outward from an outer circumferential surface at the upper end position of the second support cylinder 33. An outer diameter of the second locked part 35 is smaller than the inner diameter of the first support cylinder 23 and larger than the inner diameter at the lower end of the first locking part 24. The second locked part 35 is disposed between the first guide cylinder 22 and the first locking part 24 in the vertical direction. The first locking part 24 is locked to the second locked part 35 from below the second locked part 35. Thereby, the first support part 21 and the second support part 31 are connected.

The third support part 41 includes a third guide cylinder (guide cylinder) 42, a third support cylinder 43, and a third locked part (locked part) 45. The third guide cylinder 42, the third support cylinder 43, and the third locked part 45 are each configured similarly to the second guide cylinder 32, the second support cylinder 33, and the second locked part 35 of the second support part 31, and only outer diameters and inner diameters thereof are different.

An outer diameter at an upper end of the third guide cylinder 42 is smaller than an inner diameter of the second support cylinder 33. An inner diameter at the upper end of the third guide cylinder 42 is larger than an outer diameter at a lower end of the second guide cylinder 32.

An outer diameter of the third support cylinder 43 is smaller than an inner diameter at a lower end of the second locking part 34. An upper end portion of the third support cylinder 43 is fixed to an upper end portion of the third guide cylinder 42. The upper end portion of the third support cylinder 43 can be inserted into the second support cylinder 33 and the second locking part 34.

An outer diameter of the third locked part 45 is smaller than the inner diameter of the second support cylinder 33 and larger than the inner diameter at the lower end of the second locking part 34. The third locked part 45 is disposed between the second guide cylinder 32 and the second locking part 34 in the vertical direction. The second locking part 34 is locked to the third locked part 45 from below the third locked part 45. Thereby, the second support part 31 and the third support part 41 are connected.

Further, although the traverse hardening device 1 includes the three support parts 21, 31, and 41 in the present embodiment, the number of support parts included in the traverse hardening device is not particularly limited and may be one or two, or four or more. When the traverse hardening device includes one support part or the like, the support part may be configured by only the first guide cylinder 22.

The number of support parts 21,31, and 41 (guide cylinders 22, 32, and 42) provided in the traverse hardening device 1 may be equal to, more than, or less than the number of large-diameter parts 103, 104, 105, and 106 of the shaft-like body 101. As a total length in the vertical direction of the guide cylinders 22, 32, and 42 becomes larger, the cooling liquid L scattering over a wide range in the vertical direction can be more reliably captured and the cooling liquid L can be brought closer to the shaft-like body 101 again, and thus this is more desirable.

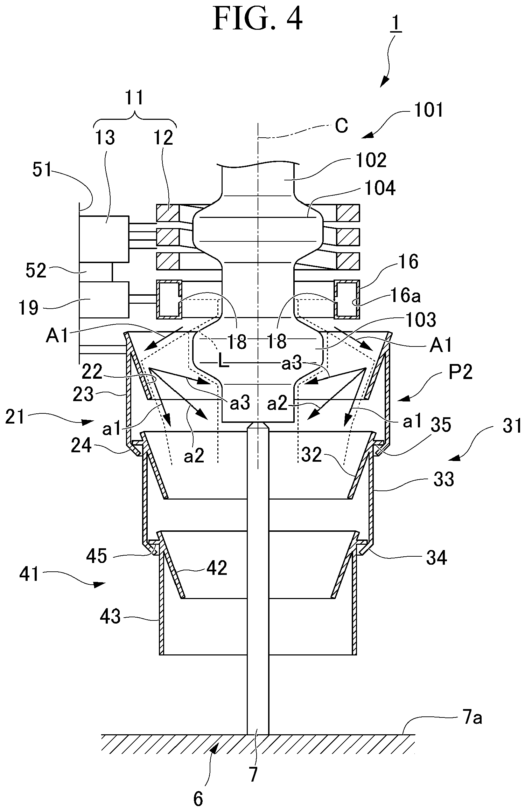

The support parts 21, 31, and 41 configured as described above have a so-called triple-nested (telescopic) structure due to the three support parts 21, 31, and 41. As illustrated in FIG. 1, the support parts 21, 31, and 41 can switch between a contracted state P1 in which an entire length in the vertical direction of the support parts 21, 31, and 41 is relatively small as illustrated in FIG. 1 and an extended state P2 in which an entire length in the vertical direction of the support parts 21, 31, and 41 is relatively large as illustrated in FIG. 4. The support parts 21, 31, and 41 each have a gradually decreasing diameter going downward.

In the contracted state P1 illustrated in FIG. 1, the first guide cylinder 22 and the second guide cylinder 32 partially overlap each other in the vertical direction. Similarly, the second guide cylinder 32 and the third guide cylinder 42 partially overlap each other in the vertical direction.

As illustrated in FIG. 1, the heating unit 11, the cooling ring 16, the pump 19, and the first support part 21 are fixed to a support plate 51. A pinion gear 51a is fixed to the support plate 51 to be rotatable. A motor 52 which rotationally drives the pinion gear 51a is attached to the support plate 51.

The support plate 51 is connected to a rack 54 via a guide rail (not illustrated). The support plate 51 is vertically movable relative to the rack 54 due to the guide rail. The pinion gear 51a meshes with teeth of the rack 54. Therefore, when the control unit 61 drives the motor 52, the pinion gear 51a is rotated, and the support plate 51 is moved upward or downward relative to the rack 54.

The control unit 61 includes an arithmetic circuit and a memory (which are not illustrated). A control program or the like for driving the arithmetic circuit is stored in the memory.

The control unit 61 is connected to the current transformer 13, the pump 19, and the motor 52 to control them.

Next, an operation of the traverse hardening device 1 configured as described above will be described.

As illustrated in FIG. 1, the control unit 61 drives the motor 52 so that the coil member 12 of the heating unit 11 is disposed to face the lower end portion of the main body part 102 of the shaft-like body 101 in advance. At this time, since the support parts 21, 31, and 41 are in the contracted state P1, even when the third support part 41 is in a state of being in contact with a support surface 7a, the first support part 21 can be disposed at a position below the coil member 12 and the cooling ring 16. In the contracted state P1, an upper end of the inner circumferential surface of the guide cylinder 42 of the support part 41 supports a lower end of the outer circumferential surface of the guide cylinder 32 of the support part 31, and an upper end of the inner circumferential surface of the guide cylinder 32 of the support part 31 supports a lower end of the outer circumferential surface of the guide cylinder 22 of the support part 21. Thereby, the support parts 21, 31, and 41 are coaxially disposed and the entire length in the vertical direction is made the smallest.

The control unit 61 drives the current transformer 13 to cause a high-frequency current to flow through the coil member 12. The control unit 61 drives the pump 19 to inject the cooling liquid L from the plurality of injection holes 18 of the cooling ring 16 toward the inside of the cooling ring 16. The control unit 61 drives the motor 52 to move the support plate 51 upward relative to the rack 54.

When the high-frequency current is caused to flow through the coil member 12, a current due to electromagnetic induction flows through the lower end portion of the main body part 102, and the lower end portion of the main body part 102 is heated due to electrical resistance of the main body part 102 itself. The heated lower end portion of the main body part 102 becomes austenite. The coil member 12 heats the shaft-like body 101 while moving upward.

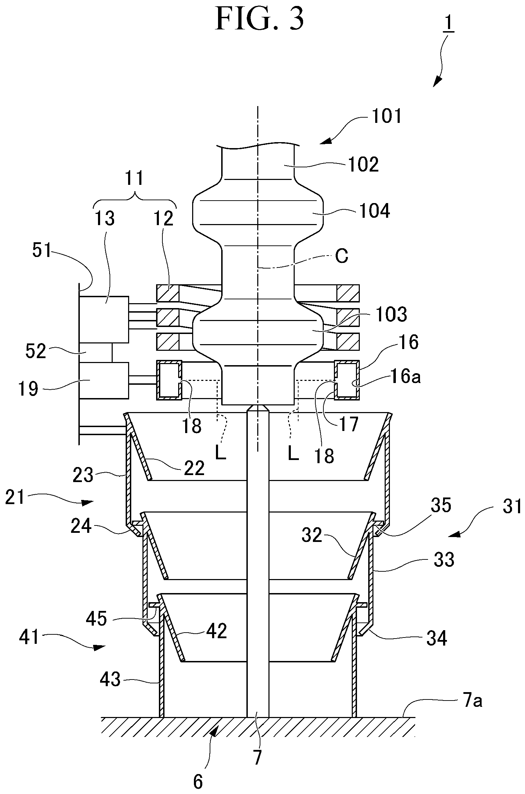

As illustrated in FIG. 3, the cooling ring 16 disposed below the coil member 12 rises to a position facing the lower end portion of the main body part 102. The lower end portion of the main body part 102 is cooled by the cooling liquid L injected from the cooling ring 16, and the lower end portion of the main body part 102 becomes martensite. In this way, the lower end portion of the main body part 102 has been subjected to traverse hardening.

The cooling liquid L that has cooled the lower end portion of the main body part 102 flows downward, for example, along an outer surface of the main body part 102.

The first support part 21 moves upward as the coil member 12 moves upward. For example, when the first locking part 24 provided in the first support cylinder 23 is locked to the second locked part 35 provided in the second support cylinder 33 from below the second locked part 35, the first support part 21 and the second support part 31 move upward integrally. At this time, the entire length in the vertical direction of the support parts 21, 31, and 41 is extended further compared to in the contracted state P1.

The second guide cylinder 32 is disposed below the first guide cylinder 22 except for an overlapping portion at an upper portion thereof. In this way, only the lower end portion (a part) of the second guide cylinder 32 may be disposed below the first guide cylinder 22.

As illustrated in FIG. 4, the cooling ring 16 rises to a position facing the main body part 102 disposed between the large-diameter part 103 and the large-diameter part 104 of the shaft-like body 101. At this time, the cooling liquid L that has been injected from the cooling ring 16 to the main body part 102 flows from the main body part 102 toward the large-diameter part 103, and further flows along the outer circumferential surface (inclined surface) of the upper portion a of the large-diameter part 103. Some of the cooling liquid L that has flowed on the large-diameter part 103 is scattered radially outward from the shaft-like body 101 as indicated by an arrow A1.

Some of the scattered cooling liquid L hits the inner circumferential surface of the first guide cylinder 22. Since the inner diameter of the first guide cylinder 22 is formed to gradually decrease downward from an upper portion, the cooling liquid L flowing downward in the first guide cylinder 22 under the effect of gravity flows along the first guide cylinder 22 to approach the shaft-like body 101. That is, the cooling liquid L flows to approach the shaft-like body 101 as indicated by arrows a1 to a3, and some of the cooling liquid L cools the shaft-like body 101 again. More specifically, some of the cooling liquid L that flows to approach the shaft-like body 101 cools the lower portion c of the large-diameter part 103 and the main body part 102 that is continuous with a lower side of the lower portion c. That is, when a direction of the flow of the cooling liquid L is changed by the first guide cylinder 22, the cooling liquid L can be spread even to a portion of the shaft-like body 101 where the cooling liquid L is hard to flow.

At this time, for example, when the second locking part 34 provided in the second support cylinder 33 is locked to the third locked part 45 provided in the third support cylinder 43 from below the third locked part 45, the support parts 21, 31, and 41 move upward integrally. The extended state P2 in which the entire length in the vertical direction of the support parts 21, 31, and 41 is relatively long is obtained.

In the support parts 21, 31, and 41 that are in the extended state P2, when the guide cylinders 22, 32, and 42 are disposed without gaps in the vertical direction, the scattered cooling liquid L can be reliably captured and the cooling liquid L can be brought closer to the shaft-like body 101, and thus this is more desirable. Configuring as described above is also desirable when the traverse hardening device includes two guide cylinders and when the traverse hardening device includes four or more guide cylinders.

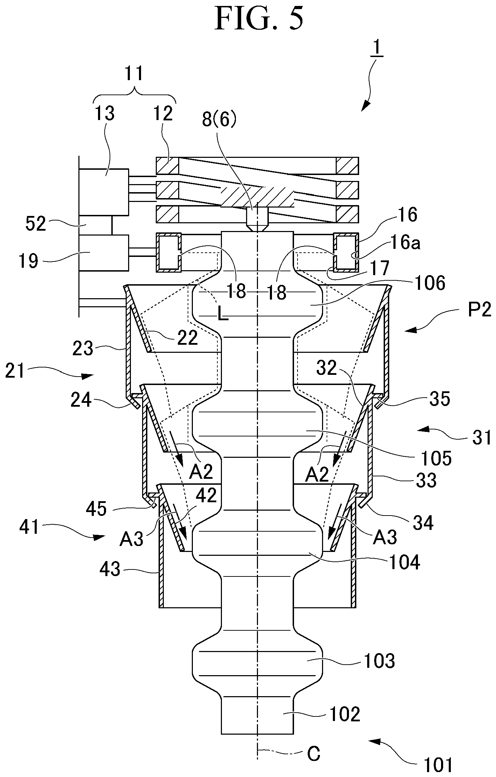

As illustrated in FIG. 5, the cooling ring 16 rises to a position facing the upper end portion of the main body part 102, and the upper end portion of the main body part 102 is subject to traverse hardening. The cooling liquid L that has flowed out below the first guide cylinder 22 and the cooling liquid L that flows from the large-diameter part 105 to a periphery thereof hit an inner circumferential surface of the second guide cylinder 32 and change a flow direction thereof. Then, the shaft-like body 101 can be cooled again using the cooling liquid L as indicated by an arrow A2. Further, the cooling liquid L that has flowed out below the second guide cylinder 32 and the cooling liquid L that flows from the large-diameter part 104 to a periphery thereof hit an inner circumferential surface of the third guide cylinder 42 and change a flow direction thereof. Then, the shaft-like body 101 can be cooled again using the cooling liquid L as indicated by an arrow A3.

The cooling liquid L flowing downward while cooling the shaft-like body 101 tends to gradually decrease in flow velocity. On the other hand, as illustrated in FIG. 5, since the first guide cylinder 22, the second guide cylinder 32, and the third guide cylinder 42 each have a decreased diameter dimension of the inner circumferential surface in a tapered manner in that order downward from an upper portion, distances thereof from the shaft-like body 101 become smaller going downward. Therefore, the cooling liquid L can be reliably brought closer to the shaft-like body 101 and supplied even when the flow velocity decreases as it flows down.

When traverse hardening for the upper end portion of the main body part 102 ends, traverse hardening for the entire shaft-like body 101 ends.

As described above, according to the traverse hardening device 1 of the present embodiment, the shaft-like body 101 is heated by the heating unit 11 and then cooled by the cooling ring 16. Some of the cooling liquid L injected from the injection holes 18 of the cooling ring 16, cooled the shaft-like body 101, and scattered radially outward hits the inner circumferential surface of the first guide cylinder 22. Since the inner diameter of the first guide cylinder 22 decreases downward from an upper portion, the cooling liquid L flowing downward in the first guide cylinder 22 under the effect of gravity flows to approach the shaft-like body 101. Some of the cooling liquid L that has flowed to approach the shaft-like body 101 cools the shaft-like body 101 again. Accordingly, the shaft-like body 101 including the large-diameter part 103 and the like can be efficiently cooled.

As a result, the shaft-like body 101 can be prevented from recovering heat due to insufficient cooling of the axial body 101 by the cooling liquid L.

Since the inner diameter of the first guide cylinder 22 decreases downward from an upper portion, the cooling liquid L that has hit the inner circumferential surface of the first guide cylinder 22 can be caused to flow more reliably to approach the shaft-like body 101.

The traverse hardening device 1 includes the first guide cylinder 22 and the second guide cylinder 32 that can be disposed below the first guide cylinder 22. Accordingly, the cooling liquid L that has flowed out below the first guide cylinder 22 hits the inner circumferential surface of the second guide cylinder 32, and thereby the shaft-like body 101 can be cooled again using the cooling liquid L that flows along the second guide cylinder 32 to approach the shaft-like body 101.

The traverse hardening device 1 includes the first support cylinder 23, the first locking part 24, the second support cylinder 33, and the second locked part 35. The first support cylinder 23 is moved upward relative to the second support cylinder 33 from a state in which at least a part of the second support cylinder 33 is inserted into the first support cylinder 23. When the first locking part 24 provided in the first support cylinder 23 is locked to the second locked part 35 provided in the second support cylinder 33 from below the second locked part 35, the first support cylinder 23 and the second support cylinder 33 move upward integrally.

In this way, the first support cylinder 23 and the second support cylinder 33 to which the first guide cylinder 22 and the second guide cylinder 32 are fixed can be switched from the contracted state P1 having a relatively small entire length in the vertical direction of the support cylinders 23 and 33 in which at least a part of the second support cylinder 33 is inserted into the first support cylinder 23 to the extended state P2 having a relatively large entire length in the vertical direction of the support cylinders 23 and 33 in which the first locking part 24 is locked to the second locked part 35 by simply moving the first support cylinder 23 upward.

The configurations of the support parts 21, 31, and 41 of the traverse hardening device 1 of the present embodiment can be modified in various ways as will be described below.

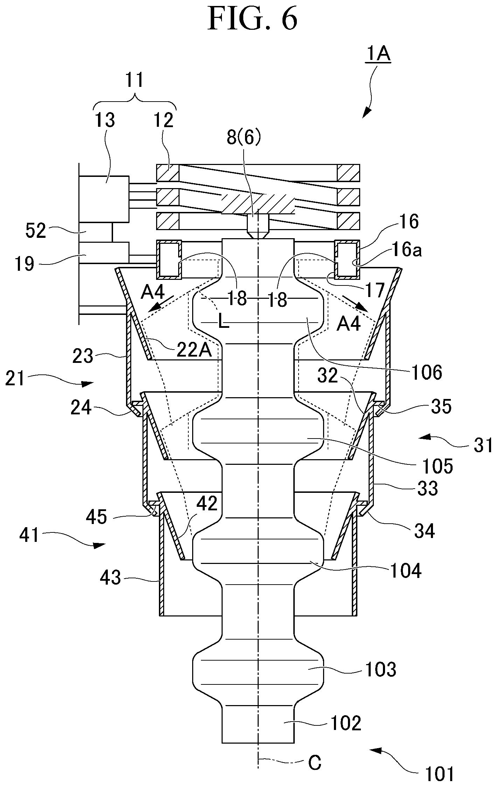

As illustrated in FIG. 6, a first guide cylinder 22A of a traverse hardening device 1A of the present modified example may be disposed such that a lower end of the through hole 17 of the cooling ring 16 (a lower end of the cooling ring 16) is surrounded by the surroundings thereof. In this modified example, an upper end of the first guide cylinder 22A is disposed at the same position (same height position) as the lower end of the through hole 17 or above the lower end of the through hole 17. A portion of the first guide cylinder 22A that is below a portion overlapping the cooling ring 16 in the vertical direction is positioned below the cooling ring 16.

When it is configured likes the traverse hardening device 1A of the present modified example, the cooling liquid L injected from the injection holes 18 of the cooling ring 16, hitting the shaft-like body 101, and then flowing downward can be made to reliably hit an inner circumferential surface of the first guide cylinder 22A as indicated by an arrow A4, and thereby the shaft-like body 101 can be cooled again using the cooling liquid L.

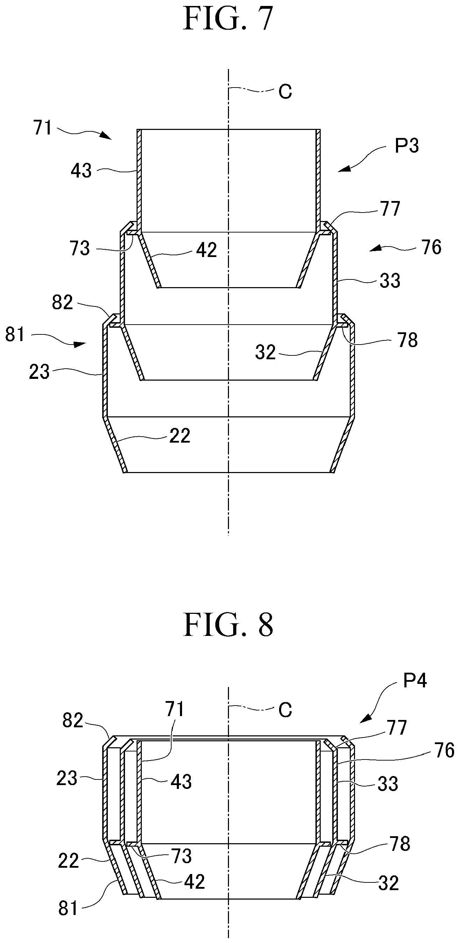

As illustrated in FIG. 7, a third support part 71, a second support part 76, and a first support part 81 each having an increased outer diameter downward may be employed. Further, the axis C is also illustrated to indicate a positional relationship of the support parts with the shaft-like body 101 in FIGS. 7 and 8.

The third support part 71, the second support part 76, and the first support part 81 can be switched between an extended state P3 in which an entire length in the vertical direction is relatively large as illustrated in FIG. 7 and a contracted state P4 in which an entire length in the vertical direction is relatively small as illustrated in FIG. 8.

As illustrated in FIGS. 7 and 8, the third support part 71 includes the third guide cylinder 42 and the third support cylinder 43 described above, and a third locking part (locking part) 73.

In this modified example, an inner diameter and an outer diameter of the third support cylinder 43 are equal to an inner diameter and an outer diameter at an upper end of the third guide cylinder 42. A lower end portion of the third support cylinder 43 is fixed to an upper end portion of the third guide cylinder 42.

The third locking part 73 is formed in an annular shape and is provided at the lower end portion of the third support cylinder 43. The third locking part 73 protrudes radially outward from the third support cylinder 43.

The second support part 76 includes the second guide cylinder 32 and the second support cylinder 33 described above, and a second locked part (locked part) 77, and a second locking part (locking part) 78. The second guide cylinder 32, the second support cylinder 33, and the second locking part 78 are configured similarly to the third guide cylinder 42, the third support cylinder 43, and the third locking part 73 of the third support part 71, and only outer diameters and inner diameters thereof are different. An inner diameter of the second support cylinder 33 is larger than an outer diameter of the third locking part 73.

The second locked part 77 is formed in a cylindrical shape and is provided at an upper end portion of the second support cylinder 33. An inner diameter and an outer diameter of the second locked part 77 gradually decrease upward from below. An inner diameter at an upper end of the second locked part 77 is smaller than the outer diameter of the third locking part 73. An inner diameter at a lower end of the second guide cylinder 32 is smaller than the outer diameter of the third locking part 73.

The first support part 81 includes the first guide cylinder 22 and the first support cylinder 23 described above, and the first locked part (locked part) 82. The first guide cylinder 22, the first support cylinder 23, and the first locked part 82 are configured similarly to the second guide cylinder 32, the second support cylinder 33, and the second locked part 77 of the second support part 76, and only outer diameters and inner diameters thereof are different. An inner diameter of the first support cylinder 23 is larger than an outer diameter of the second locking part 78.

An inner diameter at an upper end of the first locked part 82 is smaller than the outer diameter of the second locking part 78. An inner diameter of a lower end of the first guide cylinder 22 is smaller than the outer diameter of the second locking part 78.

When the third support part 71, the second support part 76, and the first support part 81 configured as described above are in the extended state P3 illustrated in FIG. 7, the third locking part 73 is locked to the second locked part 77 from below the second locked part 77. Thereby, the third support part 71 and the second support part 76 are connected. The second locking part 78 is locked to the first locked part 82 from below the first locked part 82. Thereby, the second support part 76 and the first support part 81 are connected.

On the other hand, when the third support part 71, the second support part 76, and the first support part 81 are in the contracted state P4 illustrated in FIG. 8, the third locking part 73 is rocked to the second guide cylinder 32 from above the second guide cylinder 32. Thereby, the third support part 71 cannot move downward with respect to the second support part 76. The second locking part 78 is locked to the first guide cylinder 22 from above the first guide cylinder 22. Thereby, the second support part 76 cannot move downward with respect to the first support part 81.

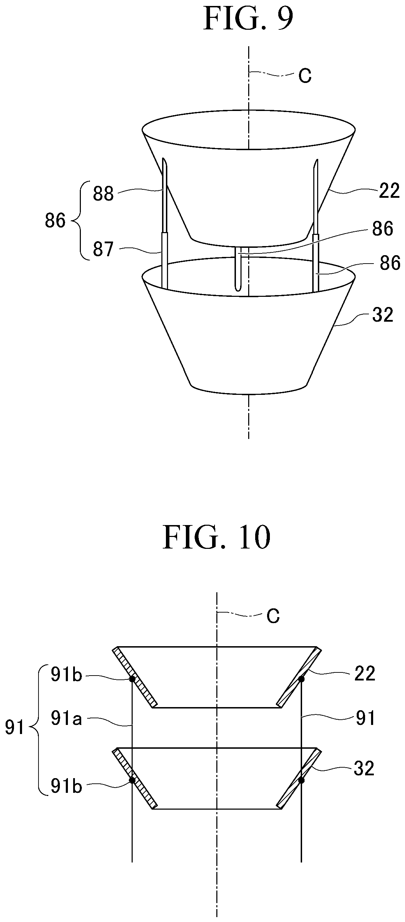

As illustrated in FIG. 9, the first guide cylinder 22 and the second guide cylinder 32 may be connected by a plurality (three in the present modified example) of connecting members 86. In FIG. 9, the axis C is also illustrated to indicate a positional relationship of the guide cylinders with the shaft-like body 101.

The plurality of connecting members 86 are disposed at equiangular intervals around the axis C. The connecting members 86 have a so-called nested structure. For example, the connecting member 86 includes a large-diameter cylinder 87 and a small-diameter cylinder 88. The small-diameter cylinder 88 can be coaxially inserted into the large-diameter cylinder 87 and is held at a desired position in a longitudinal direction of the large-diameter cylinder 87 with respect to the large-diameter cylinder 87. An end portion of the large-diameter cylinder 87 is fixed to an inner circumferential surface of the second guide cylinder 32, and an end portion of the small-diameter cylinder 88 is fixed to an outer circumferential surface of the first guide cylinder 22.

When an entire length in the vertical direction of the large-diameter cylinder 87 and the small-diameter cylinder 88 is made relatively large, the guide cylinders 22 and 32 and the connecting members 86 are in an extended state. On the other hand, when the entire length in the vertical direction of the large-diameter cylinder 87 and the small-diameter cylinder 88 is made relatively small, the guide cylinders 22 and 32 and the connecting members 86 are in a contracted state.

As illustrated in FIG. 10, the first guide cylinder 22 and the second guide cylinder 32 may be connected by a plurality of connecting members 91. In FIG. 10, the axis C is also illustrated to indicate a positional relationship of the guide cylinders with the shaft-like body 101.

The connecting members 91 are each formed of a wire member 91a such as a string or a wire. When the wire member 91a is formed of a string, the string is preferably formed of a material having heat resistance.

For example, communication holes (not illustrated) are formed in outer edge portions of upper end portions of the guide cylinders 22 and 32. The wire member 91a is fixed to the guide cylinders 22 and 32 by forming knots 91b with the wire member 91a inserted into the communication holes of the guide cylinders 22 and 32.

In this modified example, when the wire member 91a is made to be in a stretched state in the vertical direction, the guide cylinders 22 and 32 and the plurality of connecting members 91 are in an extended state. On the other hand, when the wire member 91a is made to be in a slacked state, the guide cylinders 22 and 32 and the plurality of connecting members 91 are in a contracted state.

As described above, examples in which the support parts (guide cylinders and support cylinders) each have decreased or increased outer diameter gradually downward have been described. However, outer diameters of the support parts may be made equal to each other as, for example, in the modified example illustrated in FIG. 9 described above. When the scattered cooling liquid L can be reliably captured and the cooling liquid L can be brought closer to the shaft-like body 101 again, effects can be expected regardless of sizes of outer diameters of the support parts.

While one embodiment and various modified examples of the present invention have been described in detail as above with reference to the drawings, the specific configurations are not limited only thereto and include changes, combinations, deletions, or the like in the configurations within the scope not departing from the invention as defined by the claims.

For example, although the shaft-like body 101 has been described as an axle of a railway vehicle, the shaft-like body 101 is not limited thereto and may be a ball screw shaft or the like.

### [Field of Industrial Application]

According to the present invention, it is possible to provide a traverse hardening device capable of efficiently cooling a shaft-like body including a large-diameter part having an outer diameter larger than that of a main body part.

### [Brief Description of the Reference Symbols]

1, 1A Traverse hardening device
16 Cooling ring (cooling unit)
17 Through hole
18 Injection hole
22, 22A First guide cylinder (guide cylinder)
24 First locking part (locking part)
32 Second guide cylinder (guide cylinder)
34, 78 Second locking part (locking part)
35, 77 Second locked part (locked part)
42 Third guide cylinder (guide cylinder)
73 Third locking part (locking part)
45 Third locked part (locked part)
82 First locked part (locked part)
101 Shaft-like body
102 Main body part
103, 104, 105, 106 Large-diameter part
C Axis
L Cooling liquid

## Claims

1. A traverse hardening device which performs traverse hardening on a shaft-like body which
includes a main body part, and a large-diameter part provided in a part of the main body part in an axial direction and having an outer diameter larger than that of the main body part, and
is disposed such that an axis thereof is directed along a vertical direction,
the traverse hardening device comprising:
a heating unit which heats the shaft-like body;
a cooling unit including
a through hole which penetrates in the vertical direction and through which the shaft-like body is inserted, and
an injection hole formed on an inner circumferential surface of the through hole and configured to inject a cooling liquid; and **characterised in that** it includes
a guide cylinder in which an inner diameter of a lower end is smaller than an inner diameter of an upper end and at least a part thereof is disposed below the cooling unit and through which the shaft-like body is inserted.

2. The traverse hardening device according to claim 1, wherein an inner diameter of the guide cylinder gradually decreases downward from an upper portion.

3. The traverse hardening device according to claim 1 or 2, wherein
the guide cylinder is disposed to surround a lower end of the through hole, and
the upper end of the guide cylinder is disposed at the same height position as the lower end of the through hole or above the lower end of the through hole.

4. The traverse hardening device according to any one of claims 1 to 3, comprising, as the guide cylinder:
a first guide cylinder; and
a second guide cylinder at least a part of which is able to be disposed below the first guide cylinder.

5. The traverse hardening device according to claims 4, comprising:
a first support cylinder to which the first guide cylinder is fixed;
a second support cylinder to which the second guide cylinder is fixed and at least a part of which is insertable into the first support cylinder;
a locking part provided in the first support cylinder; and
a locked part which is provided in the second support cylinder and to which the locking part is locked from below.

## Patentansprüche

1. Vorrichtung zum Querhärten, die ein Querhärten an einem Wellen-artigen Körper durchführt, der
einen Hauptkörperteil und einen Teil mit großem Durchmesser aufweist, der in einem Teil des Hauptkörperteils in einer axialen Richtung vorgesehen ist und einen größeren Außendurchmesser als der Hauptkörperteil hat, und
so angeordnet ist, dass eine Achse davon entlang einer vertikalen Richtung gerichtet ist, wobei die Vorrichtung zum Querhärten aufweist:
eine Erwärmungseinheit, die den Wellen-artigen Körper erwärmt;
eine Kühleinheit mit
einem Durchgangsloch, das in der vertikalen Richtung durchdringt und durch welches der Wellen-artige Körper eingeführt wird, und
eine Einspritzöffnung, die an einer inneren Umfangsfläche des Durchgangslochs ausgebildet und konfiguriert ist, um eine Kühlflüssigkeit einzuspritzen; und **dadurch gekennzeichnet, dass** sie umfasst
einen Führungszylinder, bei dem ein Innendurchmesser eines unteren Endes kleiner ist als ein Innendurchmesser eines oberen Endes und von dem zumindest ein Teil unterhalb der Kühleinheit angeordnet ist und durch den der Wellen-artige Körper eingeführt wird.

2. Vorrichtung zum Querhärten nach Anspruch 1, wobei ein Innendurchmesser des Führungszylinders von einem oberen Abschnitt aus graduell nach unten abnimmt.

3. Vorrichtung zum Querhärten nach Anspruch 1 oder 2, wobei
der Führungszylinder so angeordnet ist, dass er ein unteres Ende des Durchgangslochs umgibt, und
das obere Ende des Führungszylinders in der gleichen Höhenposition wie das untere Ende des Durchgangslochs oder oberhalb des unteren Endes des Durchgangslochs angeordnet ist.

4. Vorrichtung zum Querhärten nach einem der Ansprüche 1 bis 3, die als Führungszylinder umfasst
einen ersten Führungszylinder; und
einen zweiten Führungszylinder, von dem zumindest ein Teil unterhalb des ersten Führungszylinders angeordnet werden kann.

5. Vorrichtung zum Querhärten nach Anspruch 4, umfassend:
einen ersten Stützzylinder, an dem der erste Führungszylinder befestigt ist;
einen zweiten Stützzylinder, an dem der zweite Führungszylinder befestigt ist und von dem zumindest ein Teil in den ersten Stützzylinder einführbar ist;
ein Verriegelungsteil, das in dem ersten Stützzylinder vorgesehen ist; und
ein Verriegelungsteil, das in dem zweiten Stützzylinder vorgesehen ist und mit dem das Verriegelungsteil von unten verriegelt wird.

## Revendications

1. Dispositif de durcissement transversal qui réalise un durcissement transversal sur un corps en forme d'arbre qui
inclut une partie de corps principal, et une partie de large diamètre fournie dans une partie de la partie de corps principal dans une direction axiale et ayant un diamètre externe plus large que celui de la partie de corps principal, et
est disposé de sorte qu'un axe de celui-ci est dirigé le long d'une direction verticale,
le dispositif de durcissement transversal comprenant :
une unité de chauffage qui chauffe le corps en forme d'arbre ;
une unité de refroidissement incluant
une perforation qui pénètre dans la direction verticale et à travers laquelle le corps en forme d'arbre est inséré, et
un trou d'injection formé sur une surface circonférentielle interne de la perforation et configuré pour injecter un liquide de refroidissement ; et **caractérisé en ce qu'**il inclut
un cylindre de guidage dans lequel un diamètre interne d'une extrémité inférieure est inférieur à un diamètre interne d'une extrémité supérieure et au moins une partie de celui-ci est disposée sous l'unité de refroidissement et à travers lequel le corps en forme d'arbre est inséré.

2. Dispositif de durcissement transversal selon la revendication 1, dans lequel un diamètre interne du cylindre de guidage diminue progressivement vers le bas à partir d'une portion supérieure.

3. Dispositif de durcissement transversal selon la revendication 1 ou 2, dans lequel
le cylindre de guidage est disposé pour entourer une extrémité inférieure de la perforation, et
l'extrémité supérieure du cylindre de guidage est disposée à la même position de hauteur que l'extrémité inférieure de la perforation ou au-dessus de l'extrémité inférieure de la perforation.

4. Dispositif de durcissement transversal selon l'une quelconque des revendications 1 à 3, comprenant, comme cylindre de guidage :
un premier cylindre de guidage ; et
un second cylindre de guidage dont au moins une partie peut être disposée sous le premier cylindre de guidage.

5. Dispositif de durcissement transversal selon la revendication 4, comprenant :
un premier cylindre de support auquel le premier cylindre de guidage est fixé ;
un second cylindre de support auquel le second cylindre de guidage est fixé et dont au moins une partie peut être insérée dans le premier cylindre de support ;
une partie de verrouillage fournie dans le premier cylindre de support ; et
une partie verrouillée qui est fournie dans le second cylindre de support et sur laquelle la partie de verrouillage est verrouillée à partir du dessous.
